# EUROPÄISCHE PATENTSCHRIFT

(11) **EP 1 907 724 B1**
(45) Veröffentlichungstag und Bekanntmachung des Hinweises auf die Patenterteilung: **07.10.2009**
(21) Anmeldenummer: 06776226.0
(22) Anmeldetag: 13.07.2006
(51) Int. Cl.: F16F 1/36, F16F 15/00, H01F 1/44

(54) **MAGNETORHEOLOGISCHE ELASTOMERKOMPOSITE SOWIE DEREN VERWENDUNG**
MAGNETORHEOLOGICAL ELASTOMER COMPOSITES AND THEIR USE
COMPOSITE ELASTOMERE MAGNETORHEOLOGIQUE ET SON UTILISATION

(30) Priorität: 26.07.2005 DE 102005034925
(43) Veröffentlichungstag der Anmeldung: 09.04.2008
(73) Patentinhaber: Fraunhofer-Gesellschaft zur Förderung der angewandten Forschung e.V., 80686 München (DE)
(72) Erfinder: BÖSE, Holger, 97080 Würzburg (DE); RÖDER, René, 99819 Grossenlupnitz (DE)
(86) Internationale Anmeldenummer: PCT/EP2006/006864
(87) Internationale Veröffentlichungsnummer: WO 2007/012410

(56) Entgegenhaltungen:
- US-A1- 2004 126 565
- US-A1- 2005 116 194
- FLORIAN ZSCHUNKE: "Aktoren auf Basis des magnetorheologischen Effekts"[Online] 20. Juni 2005 (2005-06-20), XP002400347 Gefunden im Internet: URL:http://deposit.ddb.de/cgi-bin/dokserv? idn=976717409&dok_var=d1&dok_ext=pdf&filen ame=976717409.pdf#search=%22Magnetorheolog ische%20Elastomermatrix%22> [gefunden am 2006-09-25]

## Beschreibung

Die Erfindung betrifft magnetorheologische Elastomerkomposite aus mindestens einem, eine thermoplastische Matrix bildendenden, thermoplastischen Elastomer und darin enthaltenen magnetisierbaren Partikeln, wobei in der Elastomermatrix mindestens 10 Gew.-% Weichmacher, bezogen auf die thermoplastischen Elastomere, enthalten sind.

Magnetisch steuerbare Elastomerkomposite, sog. Magnetorheologische Elastomere (MRE), sind in allgemeiner Form bereits bekannt. Sehr viel weiter verbreitet sind Magnetorheologische Flüssigkeiten (MRF), bei denen die magnetisierbaren Partikel in einer Trägerflüssigkeit verteilt sind. Wegen der fehlenden Vernetzung der Moleküle in der Trägerflüssigkeit haben solche Materialien jedoch keine feste Form, sondern sind flüssig und damit irreversibel verformbar.

Ebenfalls bekannt ist die Möglichkeit, in einem MRE während der Vernetzung durch Anlegen eines Magnetfeldes eine kettenförmige Anordnung der Partikel zu erzeugen. Hierfür wurden bislang Silicone verwendet, die als gießfähige Vorstufen eingesetzt wurden. Daneben wurde der Einsatz von anderen technisch weit verbreiteten Elastomeren aus Natur- und Synthesekautschuk wie z. B. Nitrilkautschuk beschrieben: Damit wurden jedoch nur relativ geringe Änderungen der mechanischen Eigenschaften im Magnetfeld erreicht. Auch die Verwendung verschiedener magnetischer Partikelmaterialien in MRE wurde in allgemeiner Form bereits erwähnt.

Aus der US 2005/0116194 A1 sind MREs bekannt, die aus einer thermoplastischen Matrix und magnetisierbaren Partikeln bestehen. Die Reißdehnungen der darin beschriebenen MREs lassen jedoch zu wünschen übrig. Es wird zwar in dem vorstehend beschriebenen US-Patent von einer Reißdehnung gesprochen, die größer als 200 %, ja sogar als 1000 % sein kann, jedoch bezieht sich diese Reißdehnung nicht auf das MRE als solches, d.h. auf die Elastomermatrix mit darin enthaltenen magnetisierbaren Partikeln, sondern auf das Elastomer selbst.

Ausgehend hiervon ist es deshalb die Aufgabe der vorliegenden Erfindung, magnetorheologische Elastomerkomposite (MREs) zur Verfügung zu stellen, die insbesondere gegenüber den im Stand der Technik bekannten MREs eine deutlich erhöhte Reißdehnung aufweisen. Die MREs sollten weiterhin einen hohen Steigerungsfaktor der mechanischen Eigenschaften, wie z.B. des Schubmoduls im Magnetfeld ermöglichen.

Diese Aufgabe wird in Bezug auf den Komposit durch die kennzeichnenden Merkmale des Patentanspruchs 1 gelöst. Das Verfahren zur Herstellung der Komposite ist in Anspruch 22 und die Verwendung der erfindungsgemäßen Elastomere ist im Anspruch 24 beschrieben. Die abhängigen Unteransprüche zeigen vorteilhafte Weiterbildungen auf.

Erfindungsgemäß wird somit vorgeschlagen, dass die magnetorheologischen Elastomerkomposite der Erfindung neben der aus dem thermoplastischen Elastomer gebildeten Elastomermatrix und den magnetisierbaren Partikeln mindestens 10 Gew.-% eines Weichmachers, bezogen auf die thermoplastischen Elastomere, enthalten. Bei den erfindungsgemäßen MREs wird somit im Gegensatz zum Stand der Technik, bei denen Weichmacher lediglich in geringen Mengen als Additiv enthalten sind, der Weichmacher als strukturbildende Komponente in größeren Mengen, d.h. mit mindestens 10 Gew.-%, bezogen auf die thermoplastischen Elastomere, zugesetzt. Durch die Einarbeitung derart großer Mengen an Weichmachern wird eine sehr niedrige Grundhärte des Elastomers eingestellt, die dann besonders hohe Steigerungsraten mechanischer Eigenschaften, wie z.B. der Reißdehnung, bis zu mehr als 1000 % oder des Schubmoduls im Magnetfeld ermöglichen. Die erfindungsgemäßen MREs haben den weiteren Vorteil, dass eine leichte Verarbeitbarkeit gegeben ist. Im Vergleich zu den Elastomermaterialien, die in den MREs des Standes der Technik verwendet werden, lassen sich nun die erfindungsgemäßen Elastomerkomposite noch besser mit gängigen im Bereich der Thermoplaste bekannten Verfahren, wie Extrudieren oder Spritzgießen, verarbeiten. Damit sind auch komplexe Formteile in großen Stückzahlen kostengünstig zu produzieren. Da die Vernetzung in einem thermoplastischen Elastomer durch physikalische Wechselwirkung erzeugt wird, lassen sich die daraus hergestellten Bauteile durch Aufschmelzen bei hohen Temperaturen gut recyceln. Hierbei können auch die in den erfindungsgemäßen MREs enthaltenen magnetisierbaren Partikel, beispielsweise durch Anlegen eines Magnetfelds oder durch Filtrieren, aus der Schmelze entfernt werden. Ein weiterer Vorteil der erfindungsgemäßen MREs ist es, dass diese eine hohe Beständigkeit gegenüber polaren Medien, wie Säuren, Laugen und auch Wasser, sowie gegenüber UV-strahlung aufweisen. Die möglichen Einsatztemperaturbereiche erstrecken sich etwa von -40 bis +120 °C.

Es wurde weiterhin festgestellt, dass sowohl der Speichermodul (beschreibt das elastische Verhalten bzw. Energiespeicherung) als auch der Verlustmodul (beschreibt das viskose Verhalten bzw. Energiedissipation) durch das Magnetfeld beeinflusst werden. Gleiches gilt auch für den Verlustfaktor als Verhältnis von Verlust- und Speichermodul. Damit entstehen technisch bedeutende Möglichkeiten der gesteuerten Schwingungsdämpfung bzw. Schwingungsisolation.

Eine weitere interessante Eigenschaft der Magnetorheologischen Elastomerkomposite der Erfindung besteht im Auftreten eines Formgedächtniseffektes. Im Magnetfeld und damit im versteiften Zustand des Komposits kann ein aus dem Kompositmaterial abgeformter Gegenstand durch Einwirken von äußeren Kräften verformt werden. Die neue Form bleibt anschließend erhalten, solange das Magnetfeld wirkt. Nach Abschalten des Magnetfeldes geht der Gegenstand in seine ursprüngliche Form zurück. Dieser Effekt lässt sich darauf zurückführen, dass im Magnetfeld die magnetischen Kräfte zwischen den Teilchen dominieren, während das Verhalten ohne Magnetfeld durch die elastischen Kräfte des Elastomers bestimmt wird. Eine Voraussetzung hierfür besteht darin, dass die elastischen Kräfte nicht zu stark sind. Eine weiche Elastomermatrix ist daher besonders vorteilhaft. Das beschriebene Verhalten kann für Sicherheitssysteme genutzt werden.

Eine weitere Möglichkeit der Nutzung von weichen magnetisch steuerbaren Elastomerkomposite besteht im Aufbau eines Magnetkreises unter Einschluss eines Elektromagneten und eines Permanentmagneten. Durch die Auswahl des Permanentmagneten kann eine erhöhte Grundsteifigkeit des Elastomerkomposits eingestellt werden. Der Elektromagnet kann je nach Richtung des erzeugten Stromes das Magnetfeld verstärken oder schwächen und damit die Steifigkeit des Elastomerkomposites (E-Modul bzw. Schubmodul) entweder erhöhen oder verringern. Damit kann beispielsweise der Arbeitspunkt in einem schwingungsdämpfenden System festgelegt werden.

Bei den magnetorheologischen Elastomerkompositen der Erfindung hat es sich als günstig herausgestellt, wenn als Weichmacher paraffinische oder naphthenische Öle eingesetzt werden. Bevorzugt wird dabei der Weichmacher mit 20 bis 300 Gew.-%, besonders bevorzugt mit 30 bis 200 Gew.-%, bezogen auf die thermoplastischen Elastomere, eingesetzt. Weitere bevorzugte Bereiche sind 40 bis 200, 50 bis 200, 60 bis 200 sowie 80 bis 200 Gew.-%.

Bei den thermoplastischen Elastomeren sind diejenigen bevorzugt, die eine Shore-Härte kleiner 20, besonders bevorzugt kleiner 10, aufweisen. Weitere günstige Eigenschaften, die das thermoplastische Elastomer aufweisen sollten, sind ein Schubmodul bei einer Frequenz von 10 Hz und einer Deformation von 1 % kleiner 500 kPa, bevorzugt kleiner 250 kPa, besonders bevorzugt < 150 kPa. Gute Ergebnisse werden auch noch erzielt, wenn das Schubmodul < 100 kPa ist. Bevorzugt ist ferner, wenn ein E-Modul kleiner 1500 kPa, besonders bevorzugt kleiner 750 kPa, vorliegt.

Der Schubmodul gemäß der Erfindung beschreibt das mechanische Verhalten des Materials des Materials bei einer Scherdeformation, indem er den Zusammenhang zwischen der die Scherdeformation erzeugenden Schubspannung und dem Deformationswinkel herstellt.

Genauer betrachtet tritt bei einer sinusförmigen Scherdeformation eine Phasenverschiebung zwischen Schubspannung und Deformation auf. Dies wird durch einen komplexen Schubmodul G* = G' + i G'' beschrieben, wobei der Realteil G' Speichermodul (beschreibt das elastische Verhalten des Materials bzw. Energiespeicherung) und der Imaginärteil G'' Verlustmodul (beschreibt das viskose Verhalten des Materials bzw. Energiedissipation) genannt wird. Wenn der Imaginärteil gegenüber dem Realteil vernachlässigbar ist, kann der Schubmodul mit dem Speichermodul gleichgesetzt werden. Ansonsten ergibt sich der Schubmodul als Betrag der komplexen Größe (G = (G'² + G''²)^{1/2}). Der Speichermodul kann damit nicht größer als der Schubmodul, sondern maximal diesem gleich werden.

Aus stofflicher Sicht sind als thermoplastisches Elastomer insbesondere Styrol-Block-Copolymere bevorzugt. Bevorzugt sind hierbei Styrol-Olefin-Block-Copolymere. Beispiele hierfür sind Styrol-Ethylen-Butylen-Block-Copolymer sowie Styrol-Ethylen-Propylen-Block-Copolymer. Die thermoplastischen Elastomere, die die Elastomermatrix der erfindungsgemäßen MREs bildet, können selbstverständlich auch in einer Mischung eingesetzt werden.

Bei den magnetisierbaren Partikeln können an und für sich alle im Stand der Technik für MREs bekannten magnetisierbaren Partikel eingesetzt werden.

Geeignet sind hierfür magnetisierbare Partikel aus weichmagnetischen Materialien, wie z.B. magnetisierbare Partikel aus weichmagnetischen metallischen Werkstoffen oder auch aus weichmagnetischen oxidkeramischen Werkstoffen. Beispiele für weichmagnetische metallische Werkstoffe sind Eisen, Kobalt, Nickel und deren Legierungen, wie Eisenkobalt, Eisennickel, magnetischer Stahl sowie Eisensilizium. Bei den oxidkeramischen Werkstoffen sind insbesondere die kubischen Ferrite, Perowskite und Granate der allgemeinen Formel MO.Fe₂O₃ mit einem oder mehreren Metallen aus der Gruppe M = Mn, Fe, Co, Ni, Cu, Zn, Ti, Cd oder Magnesium und/oder deren Mischungen bevorzugt. Bei der vorliegenden Erfindung können bei den magnetisierbaren Partikeln auch Partikel aus Mischferriten, wie MnZn, NiZn, NiCo, NiCuCo, NiMg sowie CuMg-Ferrite und/oder deren Mischungen eingesetzt werden. Auch ist der Einsatz von Eisenkarbid-Eisennitrid-Legierungen von Vanadium, Wolfram, Kupfer und Mangan günstig.

Wie an und für sich im Stand der Technik bekannt, können auch bei den erfindungsgemäßen MREs die magnetischen Teilchen in der Elastomermatrix gleichmäßig verteilt werden (isotroper Werkstoff) oder es kann den magnetisierbaren Partikeln durch Anlegen eines Magnetfeldes, vor dem und/oder beim Abkühlen der Schmelze eine kettenförmige Struktur entlang der Feldlinien eingeprägt werden (anisotroper Werkstoff). Durch die Stärke des während der Vernetzung herrschenden Magnetfeldes lässt sich dabei die eingeprägte Struktur vorgeben.

Bei den MREs der Erfindung können neben den in Anspruch 1 definierten wesentlichen Formulierungsbestandteilen auch zusätzlich noch Additive, wie Dispergiermittel, Antioxidantien, Entschäumer, Oberflächenmodifikatoren, Füllstoffe, Farbstoffe und/oder Antiverschleißmittel, enthalten sein.

Bei den Elastomerkompositen nach der Erfindung ist es dabei bevorzugt, wenn, bezogen auf 100 Vol-%, die Elastomermatrix 1 bis 70 Vol-%, besonders bevorzugt zwischen 10 und 50 Vol-% magnetisierbare Partikel enthält. Die Elastomerkomposite nach der Erfindung können selbstverständlich, wie an und für sich aus dem Stand der Technik bekannt, noch 0,1 bis 20 Gew.-% Additive enthalten. Die Gewichtsmenge des Additivs ist dabei bezogen auf das thermoplastische Elastomer.

Die Erfindung betrifft weiterhin ein Verfahren zur Herstellung der wie vorstehend beschriebenen Elastomerkomposite.

Beim erfindungsgemäßen Verfahren wird dabei so vorgegangen, dass das thermoplastische Elastomer mit dem Weichmacher in einer entsprechenden Menge vermischt wird und dass dann zu dieser Mischung die magnetisierbaren Partikel hinzugegeben werden. Es hat sich dabei als günstig herausgestellt, wenn die Edukte verrührt und homogenisiert werden. Die so hergestellte Mischung kann dann in einem Ofen bei erhöhter Temperatur je nach Abhängigkeit des ausgewählten thermoplastische Elastomers aufgeschmolzen und weiterhin gerührt werden. Die dann entstehende Suspension kann z.B. in eine Form gegossen und dann beim Abkühlen zum Komposit ausgehärtet werden.

Die vorliegende Erfindung betrifft weiterhin die Verwendung der vorstehend beschriebenen MREs.

Eine bevorzugte Verwendung der erfindungsgemäßen MREs liegt in Dämpfungssystemen, bei denen das Maß der Dämpfung oder Schwingungsisolation temporär durch ein variables Magnetfeld verändert werden kann. Außerdem können mit magnetisch steuerbaren Elastomerkompositen mit thermoplastischen Elastomeren haptische Systeme realisiert werden, bei denen die Steifigkeit einer Oberfläche fühlbar verändert wird. Durch die hohe Verformbarkeit der Elastomerkomposite sind darüber hinaus künstliche Muskeln denkbar, deren Ausdehnung bzw. Kontraktion magnetisch gesteuert wird.

Weitere Anwendungsmöglichkeiten bestehen in Aktoren oder Sicherungsschaltern, bei denen unter Ausnutzung des Formgedächtniseffektes durch Veränderung des Magnetfeldes eine Bewegung ausgelöst wird.

Die Erfindung wird nachfolgend anhand von Ausführungsbeispielen und Figuren näher beschrieben.
Figur 1 zeigt dabei die Kraft-Dehnungs-Kurve eines erfindungsgemäßen MRE,
Figur 2 den Anstieg des Speichermoduls der erfindungsgemäßen MREs mit der magnetischen Flussdichte bei verschiedenen Volumengehalten magnetisierbarer Partikel.
Figur 3 den Anstieg des Verlustmoduls der erfindungsgemäßen MREs mit der magnetischen Flussdichte bei verschiedenen Volumengehalten magnetisierbarer Partikel.

### Ausführungsbeispiele:

### Ausführungbeispiel 1

Magnetorheologisches Elastomer, bestehend aus thermoplastischem Elastomer, 120 % Weichmacher, bezogen auf das thermoplastische Elastomer, und 10 Vol.-% Eisenpartikeln

3,64 g Granulat (Styrol-Block-Copolymer, Dichte 0,89 g/cm³, HTP 8534/11, Thermolast K, Kraiburg TPE GmbH) werden mit 4,36 g Paraffin dünnflüssig Ph Eur, BP, NF (Dichte 0,85 g/cm³, Merck) vermischt und 24 Stunden bei Raumtemperatur in einem temperaturbeständigen Becherglas gequollen. Anschließend werden 8,02 g Eisenpulver (Dichte 7,84 g/cm³, Höganäs ASC 300, mittlere Partikelgröße 41 µm) hinzugegeben, mit einem Glasstab verrührt und homogenisiert. Die Mischung wird in einem Ofen bei 190 °C aufgeschmolzen und gerührt, bis sie homogen ist. Daraufhin wird die Suspension in eine ebenfalls auf 190 °C vorgeheizte Stahlform gegossen. Nach dem Abkühlen auf Raumtemperatur wird die Probe als Platte mit einer Dicke von 1 mm entformt.

### Ausführungsbeispiel 2

Magnetorheologisches Elastomer, bestehend aus thermoplastischem Elastomer, 120 % Weichmacher und 20 Vol.-% Eisenpartikeln

Die Herstellung erfolgt analog zu Ausführungsbeispiel. 1, wobei die Menge des Eisenpulvers auf 18,06 g erhöht wird.

### Ausführungsbeispiel 3

Magnetorheologisches Elastomer, bestehend aus thermoplastischem Elastomer, 120 % Weichmacher und 30 Vol.-% Eisenpartikeln

Die Herstellung erfolgt analog zu Ausführungsbeispiel 1, wobei die Menge des Eisenpulvers auf 30,95 g erhöht wird.

### Vergleichsbeispiel 1

Thermoplastisches Elastomer mit 120 % Weichmacher ohne Eisenpartikel

Die Herstellung erfolgt analog zu Ausführungsbeispiel 1, wobei kein Eisenpulvers zugegeben wird.

### Durchführung der Messungen an den magnetorheologischen Elastomeren

Die Reißdehnung der magnetorheologischen Elastomerproben wurde in einer mechanischen Prüfmaschine Zwick gemessen. Dabei wurde eine Probe von 40 mm Länge, 5 mm Breite und 1 mm Dicke verwendet. Bei der Messung wurde die Probe mit einer Zuggeschwindigkeit von 120 mm/min bis zum Reißen gedehnt.

Die viskoelastischen Eigenschaften der magnetorheologischen Elastomerproben wurden in einem Rotationsrheometer MCR 300 der Firma Paar-Physica in einem Magnetfeld variabler Stärke untersucht. Dabei befindet sich die scheibenförmige Probe mit 20 mm Durchmesser zwischen zwei parallelen, horizontal angeordneten Platten, von denen die obere Platte eine vorgegebene Drehschwingung ausübt und damit die Probe oszillatorisch einer Scherdeformation unterzieht. Das Magnetfeld durchdringt die Probe vertikal, d.h. senkrecht zur Plattenebene. Die Amplitude der Scherdeformation wurde mit 0,01 (entspricht 1 %) konstant gehalten. Die Frequenz der Schwingung betrug 10 Hz, die Temperatur war 25 °C. Während der Messung wurde die Stromstärke in der magnetfelderregenden Spule stufenweise gesteigert und damit die Magnetfeldstärke erhöht.

Bei der Messung werden außer der Scherdeformation auch die Schubspannung und die Phasenverschiebung zwischen beiden Größen vom Messgerät aufgenommen. Aus den Messgrößen werden der Speichermodul G' (Realteil des komplexen Schubmoduls) und der Verlustmodul G'' (Imaginärteil des komplexen Schubmoduls) bestimmt. Der Speichermodul beschreibt das elastische Verhalten des Materials (Speicherung mechanischer Energie), während der Verlustmodul das viskose Verhalten des Materials beschreibt (Dissipation mechanischer Energie und Umwandlung in Wärme)

### Anmerkungen zu den Messergebnissen

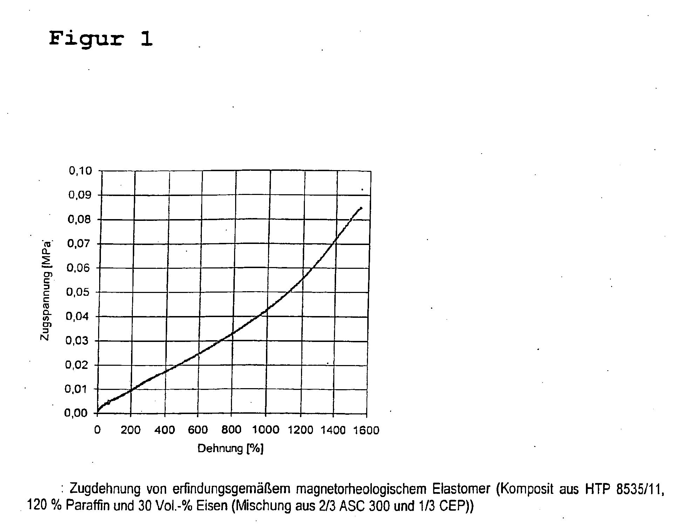

Die Kraft-Dehnungskurve in Figur 1 zeigt, dass das magnetorheologische Elastomer um bis zu etwa 1500 % gedehnt werden kann, bevor es reißt.

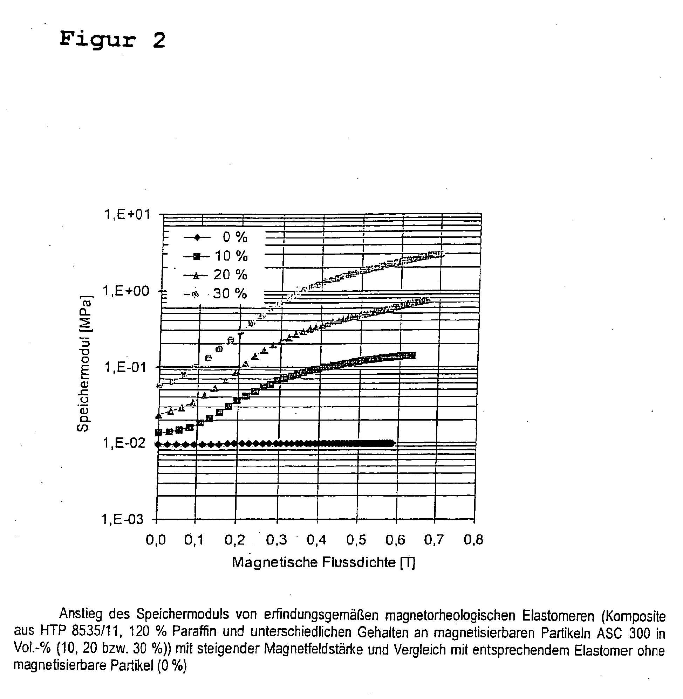

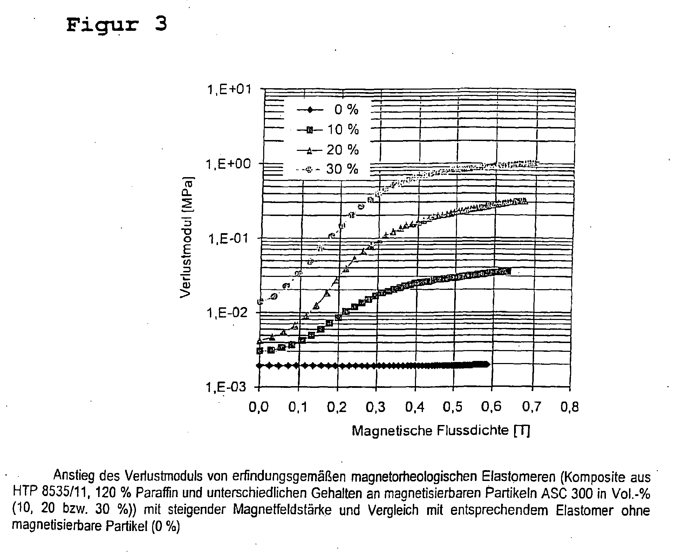

Die mit dem Rheometer erhaltenen Messergebnisse zeigen, dass die viskoelastischen Eigenschaften der magnetorheologischen Elastomere in sehr starkem Ausmaß durch die magnetische Feldstärke verändert werden können. Die viskoelastischen Eigenschaften hängen außerdem vom Volumenanteil der Eisenpartikel im Elastomer ab. Beim Ausführungsbeispiel 3 wird der Speichermodul durch ein während der Messung gesteigertes Magnetfeld mit einer Flussdichte von bis zu 700 mT von einem Anfangswert von 60 kPa auf einen Wert von nahezu 3 MPa, d.h. um einen Faktor von etwa 50, gesteigert (s. Figur 2). Für den Verlustmodul wird bei dieser Probe eine Steigerung von 15 kPa auf etwa 1 MPa erreicht (s. Figur 3).

## Patentansprüche

1. Magnetorheologische Elastomerkomposite aus mindestens einem eine thermoplastische Matrix bildenden thermoplastischen Elastomer und darin enthaltenen magnetisierbaren Partikeln, **dadurch gekennzeichnet, dass** die Elastomermatrix mindestens 10 Gew.-% Weichmacher, bezogen auf das thermoplastische Elastomer, enthält.

2. Elastomerkomposite nach Anspruch 1,
**dadurch gekennzeichnet, dass** sie 20 bis 300 Gew.-% Weichmacher enthält.

3. Elastomerkomposite nach Anspruch 2,
**dadurch gekennzeichnet, dass** sie 30 bis 200 Gew.-% Weichmacher enthält.

4. Elastomerkomposite nach mindestens einem der Ansprüche 1 bis 3,
**dadurch gekennzeichnet, dass** der Weichmacher ausgewählt ist aus paraffinischem und/oder naphthenischem Öl.

5. Elastomerkomposite nach mindestens einem der Ansprüche 1 bis 4,
**dadurch gekennzeichnet, dass** die Elastomermatrix einen Schubmodul (bei 10 Hz und Deformation 1 %) von < 500 kPa aufweist.

6. Elastomerkomposite nach Anspruch 5,
**dadurch gekennzeichnet, dass** das Schubmodul < 250 kPa, bevorzugt < 150 kPa, besonders bevorzugt < 100 kPa ist.

7. Elastomerkomposite nach mindestens einem der Ansprüche 1 bis 6,
**dadurch gekennzeichnet, dass** das thermoplastische Elastomer der Elastomermatrix ein Styrol-Block-Copolymer ist.

8. Elastomerkomposite nach Anspruch 7,
**dadurch gekennzeichnet, dass** das Styrol-Block-Copolymer, ausgewählt ist aus Styrol-Olefin-Block-Copolymer, insbesondere aus Styrol-Ethylen-Butylen-Block-Copolymer und/oder Styrol-Ethylen-Propylen-Block-Copolymer.

9. Elastomerkomposite nach einem oder mehreren der vorhergehenden Ansprüche 1 bis 8, **dadurch gekennzeichnet, dass** die magnetisierbaren Partikel aus weichmagnetischen Materialien ausgewählt sind.

10. Elastomerkomposite nach Anspruch 9,
**dadurch gekennzeichnet, dass** die magnetisierbaren Partikel aus weichmagnetischen metallischen Werkstoffen, wie Eisen, Kobalt, Nickel (auch in nicht-reiner Form) und Legierungen daraus, wie Eisen-Kobalt, Eisen-Nickel, magnetischer Stahl, Eisen-Silizium und/oder deren Mischungen ausgewählt sind.

11. Elastomerkomposite nach Anspruch 9,
**dadurch gekennzeichnet, dass** die magnetisierbaren Partikel aus weichmagnetischen oxidkeramischen Werkstoffen, wie kubischen Ferriten, Perowskiten und Granaten der allgemeinen Formel
MO.Fe₂O₃
mit einem oder mehreren Metallen aus der Gruppe M = Mn, Fe, Co, Ni, Cu, Zn, Ti, Cd oder Magnesium und/oder deren Mischungen ausgewählt sind.

12. Elastomerkomposite nach mindestens einem der Ansprüche 1 bis 8,
**dadurch gekennzeichnet, dass** die magnetisierbaren Partikel aus Mischferriten wie MnZn-, NiZn-, NiCo-, NiCuCo-, NiMg-, CuMg-Ferriten und/oder deren Mischungen ausgewählt sind.

13. Elastomerkomposite nach mindestens einem der Ansprüche 1 bis 8,
**dadurch gekennzeichnet, dass** die magnetisierbaren Partikel aus Eisencarbid, Eisennitrid, Legierungen von Vanadium, Wolfram, Kupfer und Mangan und/oder deren Mischungen ausgewählt sind.

14. Elastomerkomposite nach mindestens einem der Ansprüche 1 bis 13,
**dadurch gekennzeichnet, dass** die mittlere Partikelgröße der magnetisierbaren Partikel zwischen 5 nm und 10 mm, bevorzugt zwischen 10 nm und 1 mm liegt.

15. Elastomerkomposite nach mindestens einem der Ansprüche 1 bis 14,
**dadurch gekennzeichnet, dass** die magnetisierbaren Partikel eine bimodale oder trimodale Größenverteilung aufweisen.

16. Elastomerkomposite nach mindestens einem der Ansprüche 1 bis 15,
**dadurch gekennzeichnet, dass** die magnetisierbaren Partikel eine anisotrope Verteilung in der Elastomermatrix aufweisen.

17. Elastomerkomposite nach mindestens einem der Ansprüche 1 bis 15,
**dadurch gekennzeichnet, dass** die magnetisierbaren Partikel eine isotrope Verteilung in der Elastomermatrix aufweisen.

18. Elastomerkomposite nach mindestens einem der Ansprüche 1 bis 17,
**dadurch gekennzeichnet, dass** sie als Additive Dispergiermittel, Antioxidantien, Entschäumer, Oberflächenmodifikatoren, Füllstoffe, Farbstoffe und/oder Antiverschleißmittel enthalten.

19. Elastomerkomposite nach mindestens einem der Ansprüche 1 bis 18,
**dadurch gekennzeichnet, dass,** bezogen auf 100 Vol-%, die Elastomermatrix 1 bis 70 Vol-%, besonders bevorzugt zwischen 10 und 50 Vol-%, magnetisierbare Partikel enthält.

20. Elastomerkomposite nach Anspruch 19,
**dadurch gekennzeichnet, dass** sie 0,1 bis 20 Gew.-% Additiv, bezogen auf das thermoplastisches Elastomer, enthält.

21. Elastomerkomposite nach mindestens einem der Ansprüche 1 bis 20,
**dadurch gekennzeichnet, dass** die Reißdehnung des Elastomerkomposits größer 300 %, bevorzugt größer 800 %, ist.

22. Verfahren zur Herstellung der Elastomerkomposite nach mindestens einem der Ansprüche 1 bis 21, **dadurch gekennzeichnet, dass** das thermoplastische Elastomer mit dem Weichmacher und den magnetisierbaren Partikeln vermischt und unter Wärmebehandlung der Komposit hergestellt wird.

23. Verfahren nach Anspruch 22,
**dadurch gekennzeichnet, dass** das thermoplastische Elastomer in Granulatform vorliegt.

24. Verwendung der Elastomerkomposite nach mindestens einem der Ansprüche 1 bis 21 zur Herstellung von Formkörpern durch Extrudieren, Spritzgießen oder Gießen.

25. Verwendung nach Anspruch 24,
**dadurch gekennzeichnet, dass** während und/oder nach der Formgebung ein Magnetfeld angelegt wird.

26. Verwendung der Elastomerkomposite nach Anspruch 24 oder 25,
**dadurch gekennzeichnet, dass** der Komposit in Granulatform zur Herstellung der Formkörper durch Extrusion, Spritzgießen oder Gießen eingesetzt wird.

27. Verwendung der Elastomerkomposite nach mindestens einem der vorhergehenden Ansprüche 1 bis 21 als magnetisch steuerbare Elastomerkomposite zusammen mit einem Magnetkreis, der außer mindestens einem Elektromagneten auch mindestens einen Permanentmagneten zur Einstellung des Arbeitspunktes der Steifigkeit enthält.

28. Verwendung der Elastomerkomposite nach mindestens einem der vorhergehenden Ansprüche 1 bis 21 als magnetisch steuerbare Elastomerkomposition für die Schwingungsdämpfung, Schwingungsisolation, Aktoren, Sicherheitsschalter, haptische Systeme und künstliche Muskeln.

## Claims

1. Magnetorheological elastomer composites composed of at least one thermoplastic elastomer forming a thermoplastic matrix and magnetisable particles contained therein, **characterised in that** the elastomer matrix contains at least 10% by wt. of softener in relation to the thermoplastic elastomer.

2. Elastomer composites according to claim 1, **characterised in that** they contain 20 to 300% by wt. of softener.

3. Elastomer composites according to claim 2, **characterised in that** they contain 30 to 200% by wt. of softener.

4. Elastomer composites according to at least one of claims 1 to 3, **characterised in that** the softener is selected from paraffinic and/or naphthenic oil.

5. Elastomer composites according to at least one of claims 1 to 4, **characterised in that** the elastomer matrix has a shear modulus (at 10 Hz and 1% deformation) of < 500 kPa.

6. Elastomer composites according to claim 5, **characterised in that** shear modulus amounts to < 250 kPa, preferably < 150 kPa, particularly preferred < 100 kPa.

7. Elastomer composites according to at least one of claims 1 to 6, **characterised in that** the thermoplastic elastomer of the elastomer matrix is a styrene block copolymer.

8. Elastomer composites according to claim 7, **characterised in that** the styrene block copolymer is selected from styrene-olefin block copolymer, in particular from styrene-ethylene-butylene block copolymer and/or styrene-ethylene-propylene block copolymer.

9. Elastomer composites according to one or more of the preceding claims 1 to 8, **characterised in that** the magnetisable particles are selected from soft magnetic materials.

10. Elastomer composites according to claim 9, **characterised in that** the magnetisable particles are selected from soft magnetic metallic materials such as iron, cobalt, nickel (also in impure form) and alloys thereof such as iron-cobalt, iron-nickel, magnetic steel, iron-silicon and/or mixtures thereof.

11. Elastomer composites according to claim 9, **characterised in that** the magnetisable particles are selected from soft oxide-ceramic materials such as cubic ferrites, perovskites and garnets of the general formula
MO.Fe₂O₃
with one or more metals from the group M = Mn, Fe, Co, Ni, Cu, Zn, Ti, Cd or magnesium and/or mixtures thereof.

12. Elastomer composites according to at least one of claims 1 to 8, **characterised in that** the magnetisable particles are selected from mixed ferrites such as MnZn-, NiZn-, NiCo-, NiCuCo-, NiMg-, CuMg-ferrites and/or mixtures thereof.

13. Elastomer composites according to at least one of the preceding claims 1 to 8, **characterised in that** the magnetisable particles are selected from iron carbide, iron nitride, alloys of vanadium, tungsten, copper and manganese and/or mixtures thereof.

14. Elastomer composites according to at least one of the preceding claims 1 to 13, **characterised in that** the average particle size of the magnetisable particles lies between 5 nm and 10 mm, preferably between 10 nm and 1 mm.

15. Elastomer composites according to at least one of the preceding claims 1 to 14, **characterised in that** the magnetisable particles have a bimodal or trimodal size distribution.

16. Elastomer composites according to at least one of the preceding claims 1 to 15, **characterised in that** the magnetisable particles have an anistropic distribution in the elastomer matrix.

17. Elastomer composites according to at least one of the preceding claims 1 to 15, **characterised in that** the magnetisable particles have an isotropic distribution in the elastomer matrix.

18. Elastomer composites according to at least one of the preceding claims 1 to 17, **characterised in that** they contain dispersing agents, antioxidants, defoaming agents, surface modifiers, fillers, colouring agents and/or anti-wear agents.

19. Elastomer composites according to at least one of the preceding claims 1 to 18, **characterised in that** calculated on the basis of 100% vol., the elastomer matrix contains 1 to 70% vol., particularly preferred between 10 and 50% vol., of magnetisable particles.

20. Elastomer composites according to claim 19, **characterised in that** they contain 0.1 to 20% by wt. of additive in relation to the thermoplastic elastomer.

21. Elastomer composites according to at least one of the preceding claims 1 to 20, **characterised in that** the elongation at tear of the elastomer composite is greater than 300%, preferably greater than 800%.

22. Method for producing the elastomer composites according to at least one of claims 1 to 21, **characterised in that** the thermoplastic elastomer is mixed with the softener and the magnetisable particles and the composite is produced with thermal treatment.

23. Method according to claim 22, **characterised in that** the thermoplastic elastomer is provided in granular form.

24. Use of the elastomer composites according to at least one of claims 1 to 21 for the production of shaped bodies by extrusion, injection moulding or casting.

25. Use according to claim 24, **characterised in that** a magnetic field is applied during and/or after the shaping process.

26. Use of the elastomer composites according to claim 24 or 25, **characterised in that** the composite is used in granular form for the production of the shaped bodies by extrusion, injection moulding or casting.

27. Use of the elastomer composites according to at least one of the preceding claims 1 to 21 as magnetically controllable elastomer composites together with a magnetic circuit, which besides at least one electromagnet also includes at least one permanent magnet for adjusting the operating point of rigidity.

28. Use of the elastomer composites according to at least one of the preceding claims 1 to 21 as magnetically controllable elastomer composition for vibration damping, vibration isolation, actuators, safety switches, haptic systems and artificial muscles.

## Revendications

1. Composite élastomère magnétorhéologique composé d'au moins un élastomère thermoplastique formant une matrice thermoplastique et contenant des particules susceptibles d'être aimantées,
**caractérisé en ce que**
la matrice élastomère contient au moins 10 % en poids de plastifiant rapporté à l'élastomère thermoplastique.

2. Composite élastomère selon la revendication 1, **caractérisé en qu'**
il contient entre 20 % et 300 % en poids de plastifiant.

3. Composite élastomère selon la revendication 2,
**caractérisé en ce qu'**
il contient entre 30 % et 200 % en poids de plastifiant.

4. Composite élastomère selon au moins l'une des revendications 1 à 3, **caractérisé en ce qu'**
on choisit comme plastifiant de l'huile de paraffine et/ou de naphtène.

5. Composite élastomère selon au moins l'une des revendications 1 à 4,
**caractérisé en ce que**
la matrice élastomère a un module d'élasticité (sous 10 Hz et une déformation à 1 %) inférieur à 500 kPa.

6. Composite élastomère selon la revendication 5,
**caractérisé en ce que**
le module d'élasticité est inférieur à 250 kPa de préférence inférieur à 150 kPa de manière particulièrement préférentielle inférieur à 100 kPa.

7. Composite élastomère selon au moins l'une des revendications 1 à 6,
**caractérisé en ce que**
l'élastomère thermoplastique de la matrice élastomère est un copolymère bloc de styrène.

8. Composite élastomère selon la revendication 7,
**caractérisé en ce que**
le copolymère bloc de styrène est choisi parmi les copolymères bloc styrène-oléfines notamment le copolymère bloc styrène éthylène butylène et/ou le copolymère bloc styrène éthylène propylène.

9. Composite élastomère selon l'une des revendications 1 à 8,
**caractérisé en ce que**
les particules susceptibles d'être aimantées sont choisies dans des matériaux à aimantation douce.

10. Composite élastomère selon la revendication 9,
**caractérisé en ce que**
les particules susceptibles d'être aimantées sont choisies parmi les matières métalliques à aimantation douce telles que le fer, le cobalt, le nickel (également sous une forme non pure) et leurs alliages tels que fercobalt, fer-nickel, acier magnétique, fer-silicium et/ou leurs mélanges.

11. Composite élastomère selon la revendication 9,
**caractérisé en ce que**
les particules susceptibles d'être aimantées sont choisies parmi les céramiques oxydées à aimantation douce telles que les ferrites cubiques, les pérowskites et les grenats de formule générale
MO.Fe₂O₃
avec un ou plusieurs métaux choisis dans le groupe suivant M = Mn, Fe, Co, Ni, Cu, Zn, Ti, Cd ou du magnésium et/ou leurs mélanges.

12. Composite élastomère selon au moins l'une des revendications 1 à 8,
**caractérisé en ce que**
les particules susceptibles d'être aimantées sont choisies parmi des mélanges de ferrites tels que les ferrites MnZn, NiZn, NiCo, NiCuCo, NiMg, CuMg et/ou leurs mélanges.

13. Composite élastomère selon au moins l'une des revendications 1 à 8,
**caractérisé en ce que**
les particules susceptibles d'être aimantées sont choisies parmi le carbure de fer, le nitrure de fer, les alliages de vanaduim, tungstène, cuivre et manganèse et/ou leurs mélanges.

14. Composite élastomère selon au moins l'une des revendications 1 à 13,
**caractérisé en ce que**
la taille moyenne des particules susceptibles d'être aimantées est comprise entre 5 nm et 10 mm de préférence entre 10nm et 1 mm.

15. Composite élastomère selon au moins l'une des revendications 1 à 14,
**caractérisé en ce que**
les particules susceptibles d'être aimantées ont une répartition de dimension bimodale ou trimodale.

16. Composite élastomère selon au moins l'une des revendications 1 à 15,
**caractérisé en ce que**
les particules susceptibles d'être aimantées ont une répartition anisotropique dans la matrice élastomère.

17. Composite élastomère selon au moins l'une des revendications 1 à 15,
**caractérisé en ce que**
les particules susceptibles d'être aimantées ont une répartition isotrope dans la matrice élastomère.

18. Composite élastomère selon au moins l'une des revendications 1 à 17,
**caractérisé en ce qu'**
il contient comme additif des agents de dispersion, des antioxydants, des agents antimousses, des agents modifiant la surface, des charges, des colorants et/ou des agents anti-usure.

19. Composite élastomère selon au moins l'une des revendications 1 à 18,
**caractérisé en ce que**
par rapport à 100 % en volume, la matrice élastomère contient entre 1 % et 70 % en volume et de manière préférentielle entre 10 % et 50 % en volume de particules susceptibles d'être aimantées.

20. Composite élastomère selon la revendication 19,
**caractérisé en ce qu'**
il contient entre 0,1 % et 20 % en poids d'additifs rapportés à l'élastomère thermoplastique.

21. Composite élastomère selon au moins l'une des revendications 1 à 20,
**caractérisé en ce que**
l'allongement à la rupture du composite élastomère est supérieur à 300 % et de préférence supérieur à 800 %.

22. Procédé de fabrication du composite élastomère selon au moins l'une des revendications 1 à 21,
**caractérisé en ce que**
l'élastomère thermoplastique est mélangé avec le plastifiant et les particules susceptibles d'être aimantées pour donner le composite par traitement thermique.

23. Procédé de fabrication du composite élastomère selon la revendication 22,
**caractérisé en ce que**
l'élastomère thermoplastique se présente sous la forme de granulés.

24. Utilisation du composite élastomère selon au moins l'une des revendications 1 à 21,
pour la fabrication de corps moulés par extrusion, injection ou coulée.

25. Utilisation du composite élastomère selon la revendication 24,
**caractérisée en ce qu'on**
applique un champ magnétique pendant et/ou après la mise en forme.

26. Utilisation du composite élastomère selon la revendication 24 ou 25,
**caractérisée en ce que**
l'on utilise le composite sous forme de granulés pour fabriquer des pièces moulées par extrusion, injection ou coulée.

27. Utilisation du composite élastomère selon au moins l'une des revendications précédentes 1 à 21,
comme composite d'élastomère à commande magnétique avec un circuit magnétique qui comporte en outre au moins un électroaimant, au moins un aimant permanent pour régler le point de fonctionnement de la rigidité.

28. Utilisation du composite élastomère selon au moins l'une des revendications précédentes 1 à 21,
comme composition élastomère à commande magnétique pour l'amortissement des vibrations, l'isolation vis-à-vis des vibrations, pour des actionneurs, pour des commutateurs de sécurité, des systèmes haptiques et des muscles artificiels.
